# EUROPEAN PATENT SPECIFICATION

(11) **EP 1 244 890 B1**
(45) Date of publication and mention of the grant of the patent: **12.04.2006**
(21) Application number: 01939987.2
(22) Date of filing: 03.01.2001
(51) Int. Cl.: F25B 30/04, F25B 33/00

(54) **INTEGRATED AQUA-AMMONIA CHILLER/HEATER**
WASSER UND AMONIAK VERWENDENDE EINHEIT ZUM KÜHLEN UND HEIZEN
REFROIDISSEUR/GENERATEUR DE CHALEUR INTEGRE A EAU AMMONIACALE

(30) Priority: 05.01.2000 US 479277
(43) Date of publication of application: 02.10.2002
(73) Proprietor: ROCKY RESEARCH, Boulder City, NV 89005 (US)
(72) Inventor: SARKISIAN, Paul, Boulder City, NV 89005 (US); ROCKENFELLER, Uwe, Boulder City, NV 89005 (US)
(74) Representative: Gray, James
(86) International application number: PCT/US2001/000181
(87) International publication number: WO 2001/050075

(56) References cited:
- US-A- 4 178 989
- US-A- 4 646 541
- US-A- 5 282 369
- US-A- 5 363 668
- US-A- 5 367 884
- US-A- 5 490 393
- US-A- 5 548 971
- US-A- 5 617 733
- US-A- 5 794 456
- US-A- 5 799 502

## Description

Liquid/vapor absorption systems using ammonia refrigerant, often referred to as aqua-ammonia systems, are well-known in the art. These systems utilize absorber heat exchange or generator/absorber heat exchange (GAX) cycles carried out in absorption refrigeration chillers for supplying cooling, typically in the form of a chilled water supply directed to a hydronic loop cooperating with an indoor coil and other heat exchange components for transferring the cooling effect to the space to be conditioned. The basic components of such a chiller apparatus include an absorber, generator, condenser and evaporator and necessary piping for the ammonia refrigerant and the water based absorption fluid. The heat to the generator is supplied by a burner, and a circulating pump is required for directing the absorption fluid through the apparatus components.

When heating for the conditioned space is required, a separate water heater and tank or a furnace are used. Where the cooling and heating functions are combined in a chiller/heater assembly, two separate burners are used, one for cooling and one for the heating, and separate pumps are required for the two different hydronic loop functions.

US4178989 discloses a system for both air cooling and air heating of an indoor space utilising solar energy. The system is based upon an absorption refrigeration system having two pumps.

### Summary of the Invention

The present invention is directed to an improved and simplified aqua-ammonia apparatus in which the cooling and heating functions are integrated into a single apparatus requiring only one burner for heating the generator and one pump for directing the fluid through the hydronic loop system. According to the present invention there is provided an aqua-ammonia absorption apparatus for selective chiller/heater mode operation comprising an absorber assembly for producing ammonia-rich absorption fluid comprising an absorber and an absorber heat exchanger, a generator assembly for vaporizing ammonia from an aqua-ammonia solution, an absorption fluid loop for directing ammonia-rich absorption fluid between said absorber assembly and said generator assembly and directing absorption fluid in heat transfer communication in said absorber heat exchanger and therefrom to said generator assembly in a chiller mode and for directing refrigerant containing solution from said absorber assembly to said generator assembly in a heater mode, a condenser, an expansion valve and a heat exchanger for selectively functioning as an evaporator during a chiller mode and as a condenser during a heater mode, and a refrigerant loop for directing ammonia successively from said generator assembly to said condenser, to the expansion valve, to said heat exchanger, and to said absorber assembly during a chiller mode, means for selectively directing all ammonia vaporized in said generator assembly to said heat exchanger without passing through said condenser and said expansion valve during a heater mode, and one solution pump cooperating with said absorption fluid loop for pumping said ammonia-rich absorption fluid or said refrigerant containing solution therein during said chiller mode and said heater mode, respectively.

In the cooling mode or function, the heat exchanger functions as an evaporator. During a heating mode, the refrigerant from the generator by-passes the condenser and is directed to the heat exchanger which functions as the condenser to provide heat which is recovered for heating a conditioned space, water heating, etc. A detailed description of the apparatus components and operation, as well as the advantages of the invention will be described hereinafter.

### Brief Description of the Drawings

Figures 1A-1D schematically illustrate different embodiments of conventional GAX liquid-vapor- absorption chillers;
Figure 2 is a schematic illustration of a GAX chiller/heater of the invention showing the refrigerant condenser by-pass in a heating mode;
Figure 3 is another illustration of a GAX chiller/heater of the invention showing alternative embodiments using 3-way valves for directing refrigerant-condensar by-pass and solution-absorber by-pass;
Figure 4 illustrates an embodiment for controlling solution flow to the generator assembly using a 3-way valve instead of solenoid valves; and
Figure 5 illustrates another embodiment of the apparatus of the invention in a heating mode using gravity for returning refrigerant to the generator.

### Detailed Description of the Preferred Embodiment

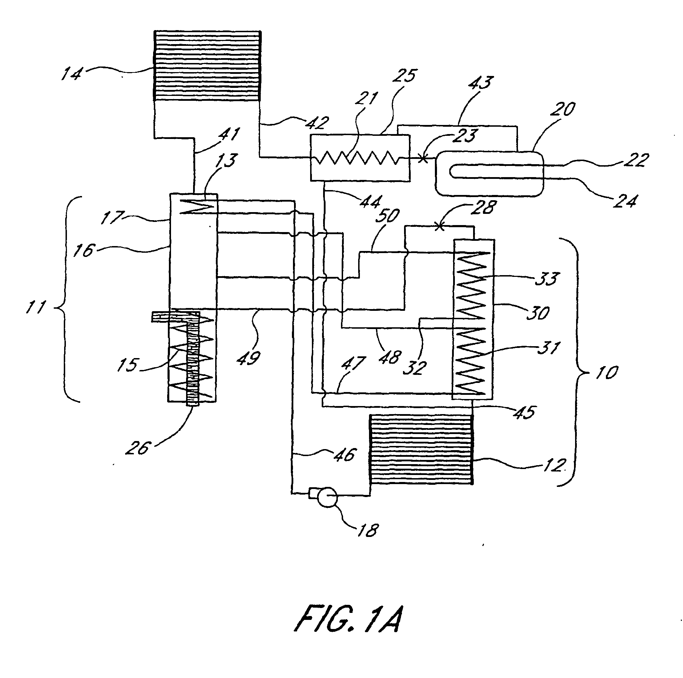

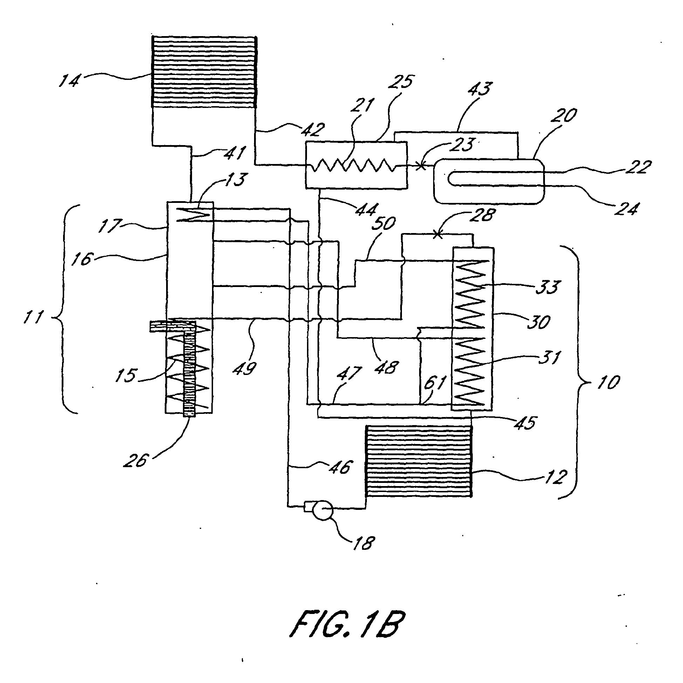

Figure 1A schematically illustrates a conventional aqua-ammonia GAX (generator absorber heat-exchange) chiller system. The major components of the chiller system include an absorber assembly 10 comprising an absorber 12 and an absorber heat exchange section 30 which includes an absorber heat exchanger 31, sometimes referred to as "HCA" or "SCA," and a GAX heat exchanger 33. A generator assembly 11 includes a generator heat exchanger 15, a boiler 26 having a bumer for heating and vaporizing the refrigerant, an adiabatic section 16, and a rectifier section 17. The burner may be of a multiple or variable capacity type, and may include a combustion air pre-heater. The use of variable or multiple capacity burners may be especially desirable in an apparatus of the invention to meet the different energy input levels needed for different cooling and heating function requirements of the chiller/heater. A condenser 14 and an evaporator 20 are the other major components of the system. The chiller system illustrated also includes a subcooler 25 for precooling refrigerant from the condenser with cold gaseous refrigerant from the evaporator. The absorber 12 and condenser 14 heat exchangers may be air or water cooled, whereas the rectifier 17 may be cooled by solution or water. Such a conventional GAX chiller is well-known in the art, for example, U.S. Patent Nos. 5,490,393 and 5,367,884, and in Modahl et al., "Evaluation of a Commercial Advanced Absorption Heat Pump Breadboard," 1988.

During operation of the conventional GAX chiller illustrated absorption fluid is pumped from the absorber 12. The refrigerant rich absorption fluid solution is pumped via pipe 46 to reflux coil 13 within rectifier 17 after which it is directed via pipe 47 to the absorber heat exchanger 31 and GAX heat exchanger 33. In the embodiment shown, a flow splitter 32 splits the absorption fluid passing from absorber heat exchanger 31, a first portion to the generator via pipe 48, and a second portion to GAX heat exchanger 33 and to the adiabatic section of the generator via pipe 50. The advantages of a GAX system over a conventional absorber heat exchange (AHE) system with flow split of a portion of the rich absorption fluid through the GAX heat exchanger are discussed in more detail in the aforesaid prior art disclosures, particularly in the Modahl et al. publication and the '884 patent. The present invention is not limited to the use of a GAX system and may use a conventional absorber heat exchange system, although the more efficient GAX cycle is preferred.

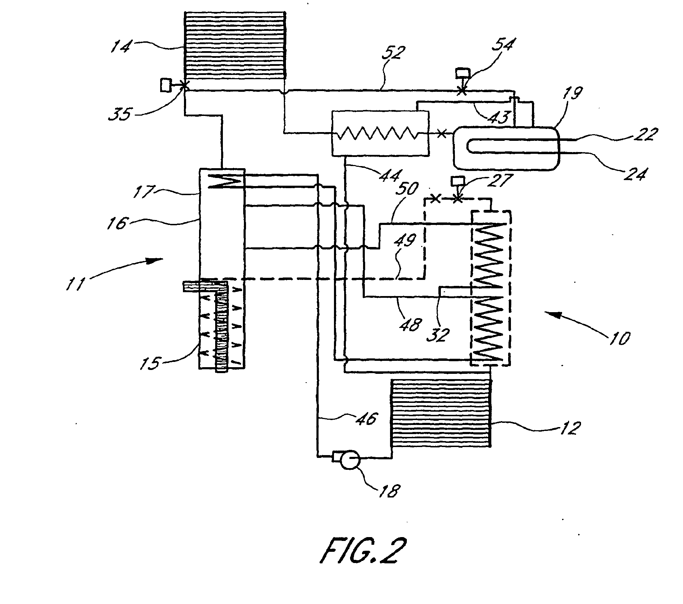

Refrigerant vapor generated in generator assembly 11 is directed to condenser 14 via pipe 41, and from the condenser to the subcooler 25 via pipe 42. In the subcooler heat exchanger 21, the condensed refrigerant is subcooled by exposure to cold gaseous refrigerant from the evaporator 20 via pipe 43. The condensed refrigerant then passes through expansion valve 23 to evaporator 20 where it evaporates to cool water or other heat transfer fluid supplied via return line 22. Chilled water or other heat transfer fluid is supplied to a load for cooling a conditioned space via supply pipe 24. The refrigerant vapor from subcooler 25 is directed via pipes 44 and 45 to the absorber assembly 10. Weak solution from the generator via pipe 49 and through throttling device 28 is directed to the absorber assembly 10. As the weak solution from the generator passes through the GAX heat exchanger 33 and the absorber heat exchanger 31, it absorbs refrigerant vapor. Although the drawing shows pipe 44 communicating with pipe 45 downstream from heat exchange section 30, it may instead introduce refrigerant vapor into the lower portion of the heat exchange section 30, preferably near the bottom. Such a feature also applies to the embodiments shown and described in Figures 2-5.

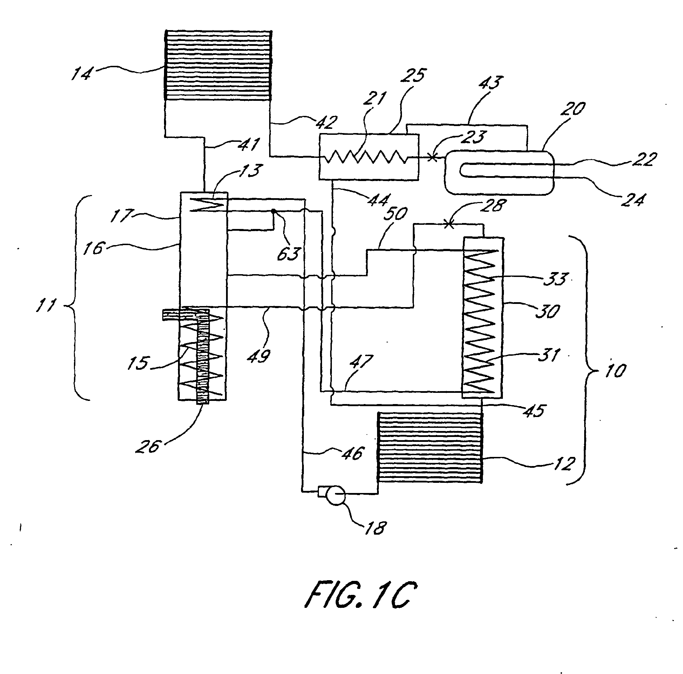

Figures 1B and 1C illustrate different routing of the rich absorption fluid, often referred to as rich liquor, used in such GAX heat exchange systems. In Figure 1B, flow splitter 61 divides the rich fluid flow in parallel between the absorber heat exchanger 31 and GAX heat exchanger 33, splitting the solution flow before it reaches the absorber heat exchanger. In Figure 1C flow splitter 63 divides the rich liquor before the absorber heat exchanger, a first portion flowing to the adiabatic section of the generator and a second portion going to the absorber heat exchanger.

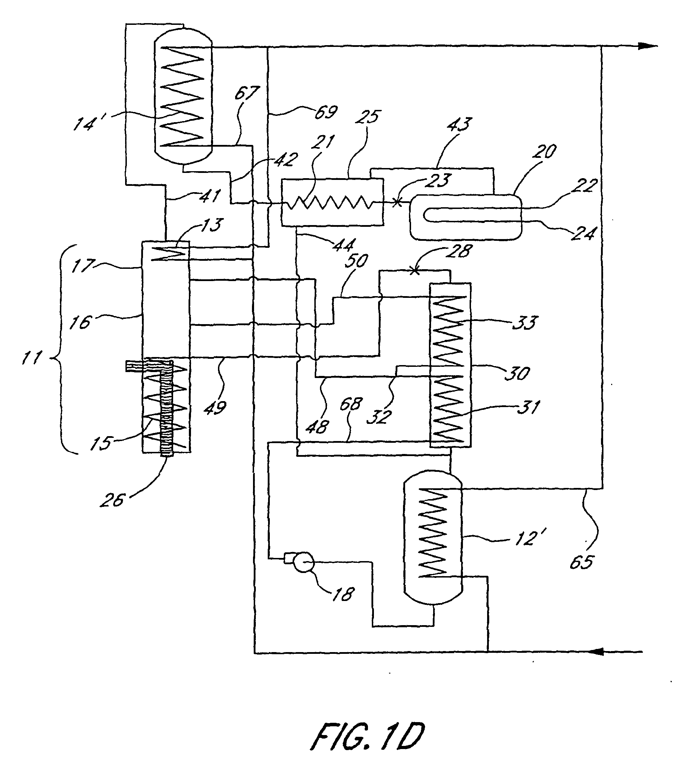

Figure 1D schematically illustrates a hydronically-cooled GAX aqua-ammonia chiller of the type shown in Figure 1A. Thus, the absorber 12 and condenser 14 are water cooled as is the rectifier 17. Cooling water is routed in parallel to the absorber, condenser and rectifier via conduits 65, 67 and 69. However, this could also be circuited in series, or in a combination of series, parallel, if desired.

Conventional chiller apparatus of the GAX types illustrated in Figures 1A-1D or a simple absorber heat exchange system provides a chilled water supply to an indoor coil in a conditioned space via a hydronic loop that usually includes antifreeze/water solutions as a heat exchange fluid. With conventional systems, to provide heat a separate boiler and/or a furnace is required. In the present invention, a conventional chiller apparatus is modified to create an integrated heater function using substantially the same conventional chiller components. The resulting apparatus produces useful heat for space conditioning without the need for an auxiliary furnace or boiler.

Referring to Figure 2, a GAX chiller/heater system of the present invention is illustrated. In the drawing, the necessary operating components used in a heating mode are shown in bold with the optional components shown in dashed lines. In the heating mode embodiment shown, refrigerant is returned to the generator using the solution pump 18. An important feature of the apparatus of the invention includes a by-pass pipe 52 for directing the refrigerant from the generator assembly 16 to a dual function heat exchanger 19 without passing through condenser 14. Also included is operated valve 35 for shut-off of refrigerant flow from the generator to the condenser 14. Solenoid operated valve 54 selectively opens and closes the pipe 52. To provide a heating function, refrigerant vapor from the generator assembly passes to heat exchanger 19 which acts as a condenser to supply heat to the water return and supply pipes 22 and 24 respectively. Condensed refrigerant from the heat exchanger is directed to the absorber 12 via pipes 43 and 44. The refrigerant enriched absorption fluid solution from the absorber is pumped to the reflux coil 13 in rectifier section 17 and through the GAX absorber assembly components as previously described. To return to a chiller operation, valve 54 is closed whereby the system functions as described for Figures 1A-1D. A solenoid operated valve 27 is also illustrated along with solution pipe 49 for selectively controlling solution flow to the absorber assembly.

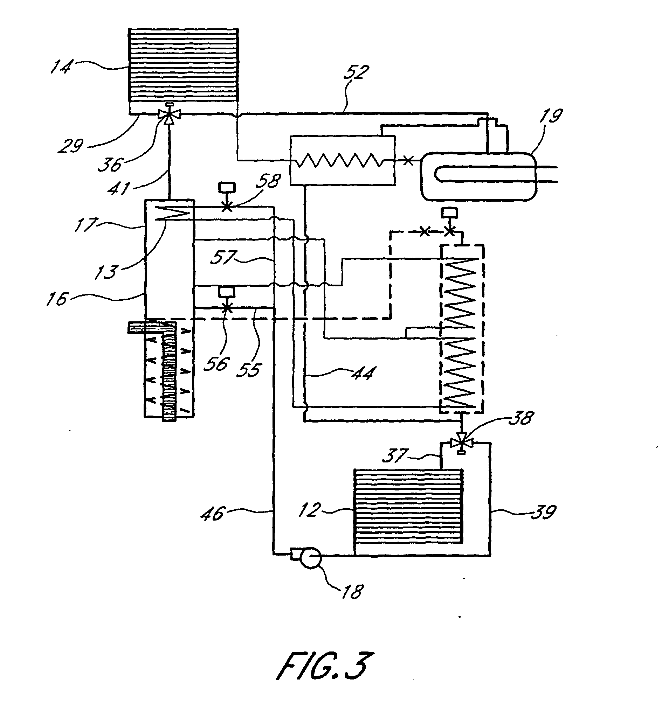

Figure 3 illustrates an alternative embodiment of the chiller/heater system of the invention. The embodiment also illustrates functioning components and piping in bold used in a heating mode including pumped return of the refrigerant to the generator with the rich solution where gravity return is not possible, or is otherwise not desired. The embodiment shown in Figure 3 incorporates 3-way valves for directing refrigerant and/or solutions for by-passing the condenser and/or the absorber. The embodiment shown also uses solenoid operated valves 56 and 58 for selectively opening and closing the pipes that direct absorption fluid to the generator assembly. These solenoid valves may be operated independently of 3-way valve 36 which is used for selectively directing refrigerant vapor to dual function heat exchanger 19 via pipe 52 to provide a heating function, or to condenser 14 via pipe 29 when it is desired to condense refrigerant in condenser 14 with heat exchanger 19 functioning as an evaporator in a cooling mode. The use of 3-way valve 36 eliminates the need for solenoid valve 54 for opening and closing pipe 52 shown in Figure 2. However, the solenoid valve 54 may be used as an alternative to the 3-way valve 36 if required by code.

In the absorption fluid loop, the embodiment shown in Figure 3 uses pipe 55 which branches or tees from pipe 46 to direct absorption fluid to the generator assembly 16, and a solenoid operated valve 56 to selectively open and close pipe 55. Pipe section 57 is an extension of pipe 46 for directing the absorption solution to reflux coil 13 of rectifier 17. Solenoid operated valve 58 selectively opens and closes the pipe portion 57. By opening valve 56 and closing valve 58, absorption solution to the rectifier and to the absorber heat exchanger 31 and GAX heat exchanger 33 may be stopped. By closing valve 58 and opening valve 56, the absorption solution is pumped directly from absorber 12 to the generator 16 where it is vaporized and directed via by-pass pipe 52 to the heat exchanger 19 acting as a condenser for supplying heating to a conditioned space or load. Thus, this simplified system embodiment avoids the use of the GAX portion of the system previously described. With the refrigerant by-pass pipe 52 open, use of a condenser cooling fan is not required.

In Figure 3, a 3-way valve 38 is also shown for selectively by-passing the absorber 12 The 3-way valve 38 may be selectively operated for directing refrigerant containing solution to the absorber 12 via pipe 37 or by-passing the absorber via pipe 39. By-passing the absorber also avoids the use of an absorber cooling fan.

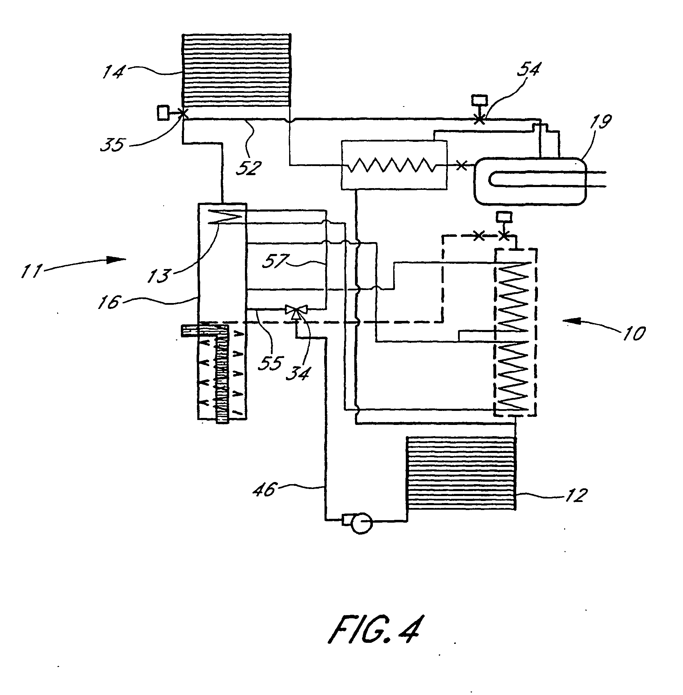

Figure 4 illustrates another alternative embodiment for directing absorption fluid to the generator assembly. In this embodiment, a 3-way valve 34 communicates with pipes 46, 55 and 57 for selectively supplying absorption fluid to reflux coil 13 or to adiabatic section 16 of the generator. Thus, the 3-way valve replaces the two solenoid valves 56, 58 used in the embodiment shown in Figure 3. Again, as in Figures 2 and 3, the bold components and piping illustrate heating mode operation with pumped refrigerant return to the generator.

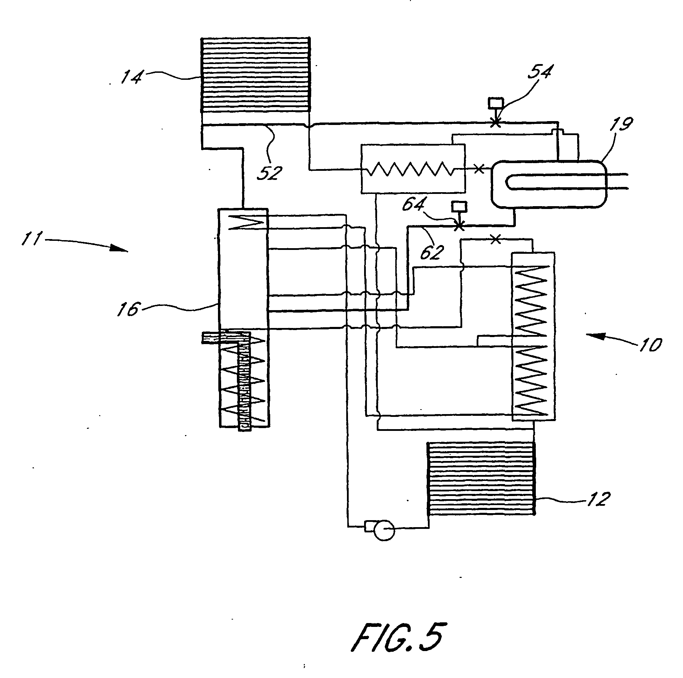

In Figure 5, there is illustrated another embodiment of the integrated chillerlheater system invention. In the embodiment shown, gravity is used for returning the refrigerant from the heat exchanger 19 to the generator 16 via pipe 62 and solenoid operated valve 64, and thus avoids the use of the pump and use of power for operating the pump. Again, in a heating mode of operation, the means for cooling the condenser and absorber are not operated, nor is the absorption fluid pumped through the system. Instead, the refrigerant is simply heated and vaporized in the generator 16, passed directly to the heat exchanger 19 via by-pass pipe 52 where it is condensed for supplying heat to the hot water supply and finally to a load or conditioned space.

In the embodiments illustrated, dual function heat exchanger 19 is described as communicating with an indoor coil for directing the heat from the condenser operation of the heat exchanger, as well as cooling where the heat exchanger operates as an evaporator, via a hydronic loop. However, if presently existing codes regarding the use of ammonia as a refrigerant are relaxed, the coil could be a direct-expansion type indoor coil without the need for a hydronic loop or alternatively, employing other suitable heat transfer fluids including liquid/vapor phase change fluids. As previously noted, the present invention allows for heater functioning of an aqua-ammonia chiller without requiring a second burner or boiler to produce heat for a conditioned space load. Moreover, only one circulating pump is required for the hydronic loop whereas preserrt units having both heater and cooler functions require two pumps, one for chilled water and one for hot water. Because of the reduction in the number of major components and the addition of only solenoid valves and piping, the present invention offers substantial reduction in the cost of aqua-ammonia chiller/heater systems.

## Claims

1. An aqua-ammonia absorption apparatus for selective chiller/heater mode operation comprising an absorber assembly (10) for producing ammonia-rich absorption fluid comprising an absorber (12) and an absorber heat exchanger (31), a generator assembly (11) for vaporizing ammonia from an aqua-ammonia solution, an absorption fluid loop (46, 47) for directing ammonia-rich absorption fluid between said absorber assembly and said generator assembly and directing absorption fluid in heat transfer communication in said absorber heat exchanger (31) and therefrom to said generator assembly (11) in a chiller mode and for directing refrigerant containing solution from said absorber assembly to said generator assembly in a heater mode, a condenser (14), an expansion valve (23) and a heat exchanger (19) for selectively functioning as an evaporator during a chiller mode and as a condenser during a heater mode, and a refrigerant loop for directing ammonia successively from said generator assembly (11) to said condenser (14), to the expansion valve, to said heat exchanger (19), and to said absorber assembly (10) during a chiller mode, means for selectively directing all ammonia vaporized in said generator assembly (11) to said heat exchanger (19) without passing through said condenser (14) and said expansion valve during a heater mode, and one solution pump (18) cooperating with said absorption fluid loop for pumping said ammonia-rich absorption fluid or said refrigerant containing solution therein during said chiller mode and said heater mode, respectively.

2. An apparatus of Claim 1 wherein said means for selectively directing refrigerant comprises by-pass piping (52) and one or more valves (35, 36) cooperating therewith for selectively opening and closing said by-pass piping.

3. An apparatus of Claim 2 including energy recovery means cooperating with said heat exchanger for recovering cooling when said heat exchanger (19) functions as an evaporator and for recovering heat when said heat exchanger functions as a condenser.

4. An apparatus of Claim 3 wherein said means for recovering heating or cooling comprises apparatus for directing heat exchange fluid to and from said heat exchanger (19).

5. An apparatus of Claim 1 wherein said absorption fluid loop includes a first conduit (46, 45) for directing rich absorption fluid from said absorber to said generator assembly and a second conduit (46, 57) for directing rich absorption fluid from said absorber in sequence to a reflux coil (13) in said generator assembly, to said absorber heat exchanger (31) and to said generator assembly (11), a first valve (56) for selectively opening and closing said first conduit (55), and a second valve (58) for selectively opening and closing said second conduit (57).

6. An apparatus of Claim 1 wherein said absorption fluid loop includes a conduit (50) for directing rich absorption fluid from said absorber heat exchanger (31) in sequence to said generator absorber heat exchanger and to said generator assembly.

7. An apparatus of Claim 5 wherein said second valve (58) opens and closes said second conduit (57) between said absorber and said reflux coil.

8. An apparatus of Claim 6 wherein said absorption fluid loop includes a weak solution conduit (49) from said generator assembly (11) to said absorber assembly (10) and a valve (27) for selectively closing and opening said weak solution conduit.

9. An apparatus of Claim 2 wherein said means for selectively directing refrigerant comprises one or more pipes (41, 29, 52) for directing refrigerant to said condenser (14) and said heat exchanger (19), respectively, and one or more valves (35, 36) for allowing refrigerant to flow through said one or more pipes.

10. An apparatus of Claim 9 wherein said one or more valves comprises a 3-way valve (36) for selectively directing said refrigerant from said generator assembly to said condenser and said heat exchanger.

11. An apparatus of Claim 10 including a first refrigerant pipe (29) for directing refrigerant from said 3-way valve (36) to said condenser, and a second refrigerant pipe (52) for directing refrigerant from said 3-way valve to said heat exchanger.

12. An apparatus of Claim 1 further comprising piping (62) from said heat exchanger (19) to said generator (16) and a valve (64) cooperating therewith and wherein said heat exchanger (19) is positioned relative to said generator assembly (11) to provide for gravitational flow of condensed refrigerant from said heat exchanger to said generator assembly during a heater mode.

13. An apparatus of Claim 5 wherein said generator assembly (11) comprises a generator (16) and a rectifier (17), and first piping (46) for directing rich absorption fluid from said absorber assembly (10) to said rectifier, and wherein said pump (18) operates to pump said rich absorption fluid from said absorber assembly to said rectifier in a heater or chiller mode.

14. An apparatus of Claim 5 wherein said generator assembly comprises a generator (16) and a rectifier (17), and first piping (46) for directing rich absorption fluid from said absorber assembly (10) to said generator, and wherein said pump (18) operates to pump said rich absorption fluid from said absorber assembly to said generator in a heater or chiller mode.

15. An apparatus of Claim 1 including a subcooler (25) cooperating with said refrigerant loop for receiving condensed and vaporized refrigerant and exchanging heat therebetween.

16. An apparatus of Claim 1 wherein said generator assembly includes a multiple capacity burner.

17. An apparatus of Claim 1 wherein said generator assembly includes a variable capacity burner.

18. An apparatus of Claim 1 wherein said generator assembly includes a combustion air pre-heater.

19. An apparatus of Claim 1 including a generator-absorber heat exchange circuit comprising an absorber heat exchanger (31) and a generator-absorber heater exchanger (33) utilizing rich absorption fluid, weak absorption fluid or heat transfer fluid for heat exchange in said circuit.

20. An apparatus of Claim 19 wherein said generator-absorber heat exchange circuit for directing rich absorption fluid to said absorber heat exchanger and to said generator-absorber heat exchanger includes a flow splitter (61) for dividing the flow of rich absorption fluid between said absorber heat exchanger (31) and said generator-absorber heat exchanger (33) before said rich absorption fluid is directed into said absorber heat exchanger.

21. An apparatus of Claim 19 wherein said generator-absorber heat exchange circuit for directing rich absorption fluid to said absorber heat exchanger (31) and to said generator-absorber heat exchanger (33) includes a flow splitter (32) for dividing the flow of rich absorption fluid after it passes through said absorber heat exchanger (31).

22. An apparatus of Claim 2 wherein said one or more valves comprises a 3-way valve (36).

23. An apparatus of Claim 2 wherein said one or more valves comprises a 2-way valve (35) for selectively providing refrigerant to said heat exchanger.

24. An apparatus of Claim 2 including an operable valve (35) for selectively providing refrigerant to said condenser.

25. An apparatus of Claim 1 wherein said absorber assembly (10) includes a generator absorber heat exchanger (33) and wherein said absorption fluid loop directs absorption fluid in heat transfer communication in said absorber heat exchanger (31) and therefrom to said generator absorber heat exchanger (33) and to said generator assembly (11).

26. An apparatus of Claim 25 including first piping comprising a first conduit (55) for directing rich absorption fluid and/or refrigerant containing solution from said absorber (12) to said generator assembly (11) and a second conduit (57) for directing rich absorption fluid and/or refrigerant containing solution from said absorber to a reflux coil (13) in said generator assembly and therefrom to said absorber heat exchanger and therefrom to said generator, a first valve (56) for selectively opening and closing said first conduit, and a second valve (58) for selectively opening and closing said second conduit.

27. An apparatus of Claim 26 wherein said absorber assembly includes a generator absorber heat exchanger (33) and wherein said first piping includes a third conduit in flow splitting connection with said, second conduit for directing rich absorption fluid from said absorber heat exchanger to said generator absorber heat exchanger and therefrom to said generator.

28. An apparatus of Claim 26 wherein said second valve (58) opens and closes said second conduit (57) between said absorber and said reflux coil.

29. An apparatus of Claim 1 wherein said absorption fluid loop includes by-pass piping (39) and valving (38) cooperating therewith for selectively directing said absorption fluid or said refrigerant containing solution to said solution pump (18) without passing through said absorber (12).

30. An apparatus of Claim 29 wherein said valving comprisinga 3-way valve (38) cooperating with said piping (39) for selectively bypassing said absorber (12)

31. An apparatus of Claim 29 wherein said valving (38) comprises two or more 2-way valves for selectively by-passing to said absorber (12).

32. An apparatus of Claim 1 including a refrigerant conduit (62) for directing refrigerant from said heat exchanger (19) to said generator assembly (11) and a valve (64) for selectively opening and closing said refrigerant conduit.

33. An apparatus of Claim 32 wherein said heat exchanger is elevated above said generator assembly to provide gravity flow of condensed refrigerant from said heat exchanger (19) to said generator assembly (11) via said refrigerant conduit (62).

34. An apparatus of Claim 1 wherein said heat exchanger includes a direct-expansion-type air coil and said means for recovering heating or cooling comprises apparatus for exchanging heating or cooling from said coil.

## Patentansprüche

1. Wasser-Ammoniak Absorptionsvorrichtung zum wahlweisen Betreiben im Kühl-/Heizbetrieb, umfassend einen einen Absorber (12) und einen Absorber-Wärmetauscher (31) umfassenden Absorberaufbau (10) zur Herstellung einer ammoniakreichen Absorptionsflüssigkeit, einen Generatoraufbau (11) zum Verdampfen von Ammoniak aus einer Wasser-Ammoniaklösung, einen Absorptionsflüssigkeitskreislauf (46, 47) zur Leitung von ammoniakreicher Absorptionsflüssigkeit zwischen dem Absorberaufbau und dem Generatoraufbau und zur Leitung von Absorptionsflüssigkeit in Wärmeübertragungsverbindung im Absorber-Wärmetauscher (31) und von dort zum Generatoraufibau (11) im Kühlbetrieb und zur Leitung von Lösung enthaltendem Kältemittel vom Absorberaufbau zum Generatoraufbau im Heizbetrieb, einen Kondensator (14), ein Ausdehnungsventil (23) und einen Wärmetauscher (19), der wahlweise als Verdampfer im Kühlbetrieb und als Kondensator im Heizbetrieb arbeitet, und einen Kältemittelkreislauf zur aufeinander folgenden Leitung von Ammoniak vom Generatoraufbau (11) zum Kondensator (14), zum Expansionsventil, zum Wärmetauscher (19) und zum Absorberaufbau (10) während des Kühlbetriebs, eine Einrichtung zur wahlweisen Leitung allen im Generatoraufbau (11) verdampften Ammoniaks zum Wärmetauscher (19), im Heizbetrieb ohne durch den Kondensator (14) und das Expansionsventil geleitet zu werden, und eine Lösungspumpe (18), die mit dem Absorptionsflüssigkeitskreislauf zusammenwirkt, um die ammoniakreiche Absorptionsflüssigkeit oder das Lösung enthaltende Kältemittel während des Kühlbetriebs beziehungsweise des Heizbetriebs zu pumpen.

2. Vorrichtung nach Anspruch 1, worin die Einrichtung zur wahlweisen Leitung von Kältemittel eine Umgehungsleitung (52) und ein oder mehrere mit dieser zum wahlweisen öffnen und Schließen der Umgehungsleitung zusammenwirkende Ventile (35, 36) umfasst.

3. Vorrichtung nach Anspruch 2, umfassend eine Einrichtung zur Energierückgewinnung, die, wenn der Wärmetauscher (19) als Verdampfer arbeitet, zur Rückgewinnung von Kälte und wenn der Wärmetauscher als Kondensator arbeitet, zur Rückgewinnung von Wärme mit dem Wärmetauscher zusammenwirkt.

4. Vorrichtung nach Anspruch 3, worin die Einrichtung zur Rückgewinnung von Kälte oder Wärme eine Vorrichtung zur Leitung von Wärmeaustauschflüssigkeit zum Wärmetauscher (19) hin und von diesem weg umfasst.

5. Vorrichtung nach Anspruch 1, worin der Absorptionsflüssigkeitskreislauf eine erste Leitung (46, 45) zur Leitung reicher Absorptionsflüssigkeit vom Absorber zum Generatoraufbau und eine zweite Leitung (46, 57) zur aufeinander folgenden Leitung reicher Absorptionsflüssigkeit vom Absorber zu einer Rücklaufrohrschlange (13) im Generatoraufbau, zum Absorber-Wärmetauscher (31) und zum Generatoraufbau (11), ein erstes Ventil (56) zum wahlweisen Öffnen und Schließen der ersten Leitung (55) und ein zweites Ventil (58) zum wahlweisen Öffnen und Schließen der zweiten Leitung (57) umfasst.

6. Vorrichtung nach Anspruch 1, worin der Absorptionsflüssigkeitskreislauf eine Leitung (50) zur aufeinander folgenden Leitung reicher Absorptionsflüssigkeit vom Absorberwärmetauscher (31) zum Generator-Absorber-Wärmetauscher und zum Generatoraufbau umfasst.

7. Vorrichtung nach Anspruch 5, worin das zweite Ventil (58) die zweite Leitung (57) zwischen dem Absorber und der Rücklaufrohrschlange öffnet und schließt.

8. Vorrichtung nach Anspruch 6, worin der Absorptionsflüssigkeitskreislauf eine Leitung (49) für schwache Lösung vom Generatoraufbau (11) zum Absorberaufbau (10) und ein Ventil (27) zum wahlweisen Öffnen und Schließen der Leitung für schwache Lösung umfasst.

9. Vorrichtung nach Anspruch 2, worin die Einrichtung zur wahlweisen Leitung von Kältemittel eine oder mehrere Leitungen (41, 29, 52) zur jeweiligen Leitung von Kältemittel zum Kondensator (14) und zum Wärmetauscher (19), und ein oder mehrere Ventile (35, 36), die es dem Kältemittel ermöglichen, durch die eine oder mehrere Leitung(en) zu fließen, umfasst.

10. Vorrichtung nach Anspruch 9, worin das eine oder die mehreren Ventile ein Dreiwegventil (36) zur wahlweisen Leitung des Kältemittels vom Generatoraufbau zum Kondensator und zum Wärmetauscher umfasst/umfassen.

11. Vorrichtung nach Anspruch 10, umfassend eine erste Kältemittelleitung (29) zur Leitung von Kältemittel von dem Dreiwegventil (36) zum Kondensator, und eine zweite Kältemittelleitung (52) zur Leitung von Kältemittel von dem Dreiwegventil (36) zum Wärmetauscher.

12. Vorrichtung nach Anspruch 1, weiter umfassend Rohrleitungen (62) vom Wärmetauscher (19) zum Generator (16) und ein damit zusammenwirkendes Ventil (64), und worin der Wärmetauscher relativ zum Generatoraufbau (11) so positioniert ist, dass er während des Heizbetriebs für einen durch Schwerkraft bewirkten Fluss von kondensiertem Kältemittel vom Wärmetauscher zum Generatoraufbau sorgt.

13. Vorrichtung nach Anspruch 5, worin der Generatoraufbau (11) einen Generator (16) und einen Rücklaufverflüssiger (17), und erste Rohrleitungen (46) zur Leitung reicher Absorptionsflüssigkeit vom Absorberaufbau (10) zum Rücklaufverflüssiger umfasst, und worin die Pumpe (18) arbeitet, um im Heiz- oder Kühlbetrieb die reiche Absorptionsflüssigkeit vom Absorberaufbau zum Rücklaufverflüssiger zu pumpen.

14. Vorrichtung nach Anspruch 5, worin der Generatoraufbau einen Generator (16) und einen Rücklaufverflüssiger (17), und erste Rohrleitungen (46) zur Leitung reicher Absorptionsflüssigkeit vom Absorberaufbau (10) zum Generator umfasst, und worin die Pumpe (18) arbeitet, um im Heiz- oder Kühlbetrieb die reiche Absorptionsflüssigkeit vom Absorberaufbau zum Generator zu pumpen.

15. Vorrichtung nach Anspruch 1, umfassend einen Unterkühler (25), der mit dem Kältemittelkreislauf zusammenwirkt, um kondensiertes und verdampftes Kältemittel aufzunehmen und zwischen ihnen Wärme auszutauschen.

16. Vorrichtung nach Anspruch 1, worin der Generatoraufbau einen Mehrfachleistungsbrenner umfasst.

17. Vorrichtung nach Anspruch 1, worin der Generatoraufbau einen Brenner mit variabler Leistung umfasst.

18. Vorrichtung nach Anspruch 1, worin der Generatoraufbau einen Verbrennungsluftvorwärmer umfasst.

19. Vorrichtung nach Anspruch 1, umfassend einen Generator-Absorber-Wärmetauscherkreis umfassend einen Absorberwärmetauscher (31) und einen Generator-Absorber-Wärmetauscher (33), der reiche Absorptionsflüssigkeit, schwache Absorptionsflüssigkeit oder Wärmeübertragungsflüssigkeit zur Wärmeübertragung in dem Kreis benutzt.

20. Vorrichtung nach Anspruch 19, worin der Generator-Absorber-Wärmetauscherkreis zur Leitung reicher Absorptionsflüssigkeit zum Absorbervvärmetauscher und zum Generator-Absorber-Wärmetauscher einen Flussteiler (61) zur Teilung des Stromes reicher Absorptionsflüssigkeit zwischen dem Absorberwärmetauscher (31) und dem Generator-Absorber-Wärmetauscher (33) bevor die reiche Absorptionsflüssigkeit in den Absorberwärmetauscher geleitet wird, umfasst.

21. Vorrichtung nach Anspruch 19, worin der Generator-Absorber-Wärmetauscherkreis zur Leitung reicher Absorptionsflüssigkeit zum Absorberwärmetauscher (31) und zum Generator-Absorber-Wärmetauscher (33) einen Flussteiler (32) zur Teilung des Stromes reicher Absorptionsflüssigkeit, nachdem dieser den Absorberwärmetauscher passiert hat, umfasst.

22. Vorrichtung nach Anspruch 2, worin das eine oder die mehreren Ventile ein Dreiwegventil (36) umfasst/umfassen.

23. Vorrichtung nach Anspruch 2, worin das eine oder die mehreren Ventile ein Zweiwegventil (35) zur wahlweisen Zulieferung von Kältemittel an den Wärmetauscher umfasst/umfassen.

24. Vorrichtung nach Anspruch 2, umfassend ein steuerbares Ventil (35) zur wahlweisen Zulieferung von Kältemittel an den Kondensator.

25. Vorrichtung nach Anspruch 1, worin der Absorberaufbau (10) einen Generator-Absorber-Wärmetauscher (33) einschließt und worin der Absorptionsflüssigkeitskreislauf Absorptionsflüssigkeit in Wärmeübertragungsverbindung im Absorberwärmetauscher (31) und von dort zum Generator-Absorber-Wärmetauscher (33) und zum Generatoraufbau (11) leitet.

26. Vorrichtung nach Anspruch 25, umfassend erste Rohrleitungen umfassend eine erste Leitung (55) zur Leitung reicher Absorptionsflüssigkeit und/oder Lösung enthaltenden Kältemittels vom Absorber (12) zum Generatoraufbau (11) und eine zweite Leitung (57) zur Leitung reicher Absorptionsflüssigkeit und/oder Lösung enthaltenden Kältemittels vom Absorber zu einer Rücklaufrohrschlange (13) im Generatoraufbau und von dort zum Absorberwärmetauscher und von dort zum Generator, sowie ein erstes Ventil (56) zum wahlweisen Öffnen und Schließen der ersten Leitung und ein zweites Ventil zum wahlweisen Öffnen und Schließen der zweiten Leitung.

27. Vorrichtung nach Anspruch 26, worin der Absorberaufbau einen Generator-Absorber-Wärmetauscher (33) umfasst und worin die ersten Rohrleitungen eine dritte Leitung in flußteilender Verbindung mit der zweiten Leitung zur Leitung von reicher Absorptionsflüssigkeit vom Absorberwärmetauscher zum Generator-Absorber-Wärmetauscher und von dort zum Generator umfassen.

28. Vorrichtung nach Anspruch 26, worin das zweite Ventil (58) die zweite Leitung (57) zwischen dem Absorber und der Rücklaufrohrschlange öffnet und schließt.

29. Vorrichtung nach Anspruch 1, worin der Absorptionsflüssigkeitskreislauf Umgehungsleitungen (39) und damit zusammenwirkende Ventileinrichtungen (38) zur wahlweisen Leitung der Absorptionsflüssigkeit oder des Lösung enthaltenden Kältemittels zur Lösungspumpe (18) ohne Durchlaufen des Absorbers (12) umfasst.

30. Vorrichtung nach Anspruch 29, worin die Ventileinrichtungen ein mit den Leitungen (39) zur wahlweisen Umgehung des Absorbers (12) zusammenwirkendes Dreiwegventil (38) umfassen.

31. Vorrichtung nach Anspruch 29, worin die Ventileinrichtungen (38) zwei oder mehr Zweiwegventile zur wahlweisen Umgehung des Absorbers (12) umfassen.

32. Vorrichtung nach Anspruch 1, umfassend eine Kältemittelleitung (62) zur Leitung von Kältemittel vom Wärmetauscher (19) zum Generatoraufbau (11) und ein Ventil (64) zum wahlweisen Öffnen und Schließen der Kältemittelleitung.

33. Vorrichtung nach Anspruch 32, worin der Wärmetauscher erhöht über dem Generatoraufbau angebracht ist, um für einen durch Schwerkraft bewirkten Fluss von kondensiertem Kältemittel vom Wärmetauscher (19) zum Generatoraufbau (11) durch die Kältemittelleitung (62) zu sorgen.

34. Vorrichtung nach Anspruch 1, worin der Wärmetauscher eine Kühlschlange mit direkter Verdampfung umfasst und die Einrichtungen zur Wärme- oder Kälterückgewinnung eine Vorrichtung zum Austausch von Wärme oder Kälte mit der Kühlschlange umfassen.

## Revendications

1. Appareil à absorption à eau ammoniacale pour un fonctionnement en mode sélectif refroidisseur/réchauffeur comprenant un ensemble d'absorbeur (10) pour produire un fluide d'absorption enrichi en ammoniac comprenant un absorbeur (12) et un échangeur de chaleur d'absorbeur (31), un ensemble de générateur (11) pour vaporiser l'ammoniac à partir d'une solution d'eau ammoniacale, une boucle de fluide d'absorption (46, 47) pour diriger le fluide d'absorption enrichi en ammoniac entre ledit ensemble d'absorption et ledit ensemble de générateur et pour diriger le fluide d'absorption en communication par transfert de chaleur dans ledit échangeur de chaleur d'absorbeur (31) et de là audit ensemble de générateur (11) dans un mode de refroidisseur et pour diriger la solution contenant le réfrigérant dudit ensemble d'absorbeur vers ledit ensemble de générateur dans un mode de réchauffeur, un condenseur (14), une vanne de détente (23) et un échangeur de chaleur (19) pour fonctionner sélectivement comme évaporateur pendant un mode de refroidisseur et comme condenseur pendant un mode de réchauffeur, et une boucle réfrigérante pour diriger l'ammoniac successivement depuis ledit ensemble de générateur (11) vers ledit condenseur (14), vers la vanne de détente, vers ledit échangeur de chaleur (19), et vers ledit ensemble d'absorbeur (10) pendant un mode de refroidisseur, un moyen pour diriger sélectivement la totalité de l'ammoniac vaporisé dans ledit ensemble de générateur (11) vers ledit échangeur de chaleur (19) sans passer au travers dudit condenseur (14) et ladite vanne de détente pendant un mode de réchauffeur, et une pompe à solution (18) coopérant avec ladite boucle de fluide d'absorption pour y pomper ledit fluide d'absorption enrichi en ammoniac ou ladite solution contenant le réfrigérant pendant ledit mode de refroidisseur et ledit mode de réchauffeur, respectivement.

2. Appareil selon la revendication 1 dans lequel ledit moyen pour diriger sélectivement le réfrigérant comprend une tuyauterie de dérivation (52) et une ou plusieurs vannes (35,36) coopérant avec celle-ci pour ouvrir et fermer sélectivement ladite tuyauterie de dérivation

3. Appareil selon la revendication 2 dans comprenant un moyen de récupération d'énergie coopérant avec ledit échangeur de chaleur pour récupérer le froid quand ledit échangeur de chaleur (19) fonctionne comme évaporateur et pour récupérer la chaleur quand ledit échangeur de chaleur fonctionne comme condenseur.

4. Appareil selon la revendication 3 dans lequel ledit moyen pour récupérer la chaleur ou le froid comprend un appareil pour diriger le fluide d'échange de chaleur vers et depuis ledit échangeur de chaleur (19).

5. Appareil selon la revendication 1 dans lequel ladite boucle de fluide d'absorption comprend un premier conduit (46, 45) pour diriger le fluide d'absorption enrichi depuis ledit absorbeur vers ledit ensemble de générateur et un second conduit (46, 57) pour diriger le fluide d'absorption enrichi depuis ledit absorbeur successivement vers un serpentin de reflux (13) dans ledit ensemble de générateur, vers ledit échangeur de chaleur d'absorbeur (31) et vers ledit ensemble de générateur (11), une première vanne (56) pour ouvrir et fermer sélectivement ledit premier conduit (55), et une seconde vanne (58) pour ouvrir et fermer sélectivement ledit second conduit (57).

6. Appareil selon la revendication 1 dans lequel ladite boucle de fluide d'absorption comprend un conduit (50) pour diriger le fluide d'absorption enrichi depuis ledit échangeur de chaleur d'absorbeur (31) successivement vers ledit échangeur de chaleur de générateur/absorbeur et vers ledit ensemble de générateur.

7. Appareil selon la revendication 5 dans lequel ladite seconde vanne (58) ouvre et ferme ledit second conduit (57) entre ledit absorbeur et ledit serpentin à reflux.

8. Appareil selon la revendication 6 dans lequel ladite boucle de fluide d'absorption comprend un conduit à solution appauvrie (49) depuis ledit ensemble de générateur (11) vers ledit ensemble d'absorbeur (10) et une vanne (27) pour fermer et ouvrir de façon sélective ledit conduit de solution appauvrie.

9. Appareil selon la revendication 2 dans lequel ledit moyen pour diriger sélectivement le réfrigérant comprend une ou plusieurs canalisations (41, 29, 52) pour diriger le réfrigérant vers ledit condenseur (14) et vers ledit échangeur de chaleur (19), respectivement, et une ou plusieurs vannes (35, 36), pour permettre au réfrigérant de s'écouler par lesdites une ou plusieurs canalisations.

10. Appareil selon la revendication 9 dans lequel lesdites une ou plusieurs vannes comprennent une vanne à trois voies (36) pour diriger sélectivement ledit réfrigérant depuis ledit ensemble de générateur vers ledit condenseur et ledit échangeur de chaleur.

11. Appareil selon la revendication 10 comprenant une première canalisation de réfrigérant (29) pour diriger le réfrigérant depuis ladite vanne à trois voies (36) vers ledit condenseur, et une seconde canalisation de réfrigérant (52) pour diriger le réfrigérant depuis ladite vanne à trois voies vers ledit échangeur de chaleur.

12. Appareil selon la revendication 1 comprenant en outre une tuyauterie (62) depuis ledit échangeur de chaleur (19) jusqu'au dit générateur (16) et une vanne (64) coopérant avec celui-ci et dans lequel ledit échangeur de chaleur (19) est positionné par rapport audit ensemble de générateur (11) de façon à produire un écoulement gravitationnel de réfrigérant condensé depuis ledit échangeur de chaleur vers ledit ensemble de générateur pendant un mode de réchauffeur.

13. Appareil selon la revendication 5 dans lequel ledit ensemble de générateur (11) comprend un générateur (16) et un rectificateur (17), et une première tuyauterie (46) pour diriger le fluide d'absorption enrichi depuis ledit ensemble d'absorbeur (10) vers ledit rectificateur, et dans lequel ladite pompe (18) opère pour pomper ledit fluide d'absorption enrichi depuis ledit ensemble d'absorbeur vers ledit rectificateur dans un mode de réchauffeur ou de refroidisseur.

14. Appareil selon la revendication 5 dans lequel ledit ensemble générateur comprend un générateur (16) et un rectificateur (17), et une première tuyauterie (46) pour diriger le fluide d'absorption enrichi depuis ledit ensemble d'absorbeur (10) vers ledit générateur, et dans lequel ladite pompe (18) opère pour pomper ledit fluide d'absorption enrichi depuis ledit ensemble d'absorbeur vers ledit générateur dans un mode de réchauffeur ou de refroidisseur.

15. Appareil selon la revendication 1 comprenant un sous-refroidisseur (25) coopérant avec ladite boucle de réfrigérant pour recevoir les réfrigérants condensé et vaporisé et échanger la chaleur entre ceux-ci.

16. Appareil selon la revendication 1 dans lequel ledit ensemble de générateur comprend un brûleur à capacité multiple.

17. Appareil selon la revendication 1 dans lequel ledit ensemble de générateur comprend un brûleur à capacité variable.

18. Appareil selon la revendication 1 dans lequel ledit ensemble de générateur comprend un préchauffeur d'air à combustion.

19. Appareil selon la revendication 1 comprenant un circuit d'échange de chaleur générateur-absorbeur comportant un échangeur de chaleur d'absorbeur (31) et un échangeur de chaleur de générateur-absorbeur (33) utilisant un fluide d'absorption enrichi, un fluide d'absorption appauvri ou un fluide de transfert de chaleur pour l'échange de chaleur dans ledit circuit.

20. Appareil selon la revendication 19 dans lequel ledit circuit d'échange de chaleur de générateur-absorbeur pour diriger le fluide d'absorption enrichi vers ledit échangeur de chaleur d'absorbeur et vers ledit échangeur de chaleur de générateur-absorbeur comprend un séparateur de flux (61) pour séparer le flux de fluide d'absorption enrichi entre ledit échangeur de chaleur d'absorbeur (31) et ledit échangeur de chaleur de générateur-absorbeur (33) avant que ledit fluide d'absorption enrichi soit dirigé vers ledit échangeur de chaleur d'absorbeur.

21. Appareil selon la revendication 19 dans lequel ledit circuit d'échange de chaleur de générateur-absorbeur pour diriger le fluide enrichi vers ledit échangeur de chaleur d'absorbeur (31) et vers ledit échangeur de chaleur de générateur-absorbeur (33) comprend un séparateur de flux (32) pour séparer le flux de fluide d'absorption enrichi une fois qu'il est passé pars ledit échangeur de chaleur d'absorbeur (31).

22. Appareil selon la revendication 2 dans lequel lesdites une ou plusieurs vannes comprennent une vanne à trois voies (36).

23. Appareil selon la revendication 2 dans lequel lesdites une ou plusieurs vannes comprennent une vanne à deux voies (35) pour fournir sélectivement le réfrigérant audit échangeur de chaleur.

24. Appareil selon la revendication 2 comprenant une vanne actionnable (35) pour fournir sélectivement du réfrigérant audit condenseur.

25. Appareil selon la revendication 1 dans lequel ledit ensemble d'absorbeur (10) comprend un échangeur de chaleur de générateur-absorbeur (33) et dans lequel ladite boucle de fluide d'absorption dirige le fluide d'absorption en communication par échange de chaleur dans ledit échangeur de chaleur d'absorbeur (31) et de là vers ledit échangeur de chaleur de générateur-absorbeur (33) et vers l'ensemble de générateur (11).

26. Appareil selon la revendication 25 comprenant une première tuyauterie comportant un premier conduit (55) pour diriger le fluide d'absorption enrichi et/ou la solution contenant le réfrigérant depuis ledit absorbeur (12) vers ledit ensemble de générateur (11) et un second conduit (57) pour diriger le fluide d'absorption enrichi et/ou la solution contenant le réfrigérant depuis ledit absorbeur vers un serpentin à reflux (13) dans ledit ensemble de générateur et de là vers ledit échangeur de chaleur d'absorbeur et de là vers ledit générateur, une première vanne (56) pour ouvrir et fermer sélectivement ledit premier conduit, et une seconde vanne (58) pour ouvrir et fermer sélectivement ledit second conduit.

27. Appareil selon la revendication 2 dans lequel ledit ensemble d'absorbeur comprend un échangeur de chaleur de générateur-absorbeur (33) et dans lequel ladite première tuyauterie comprend un troisième conduit en connexion par séparation de flux avec ledit second conduit pour diriger le fluide d'absorption enrichi depuis ledit échangeur de chaleur d'absorbeur vers ledit échangeur de chaleur de générateur-absorbeur et de là vers ledit générateur.

28. Appareil selon la revendication 26 dans lequel ladite seconde vanne (58) ouvre et ferme le second conduit (57) entre ledit absorbeur et ledit serpentin à reflux.

29. Appareil selon la revendication 1 dans lequel ladite boucle de fluide d'absorption comprend une tuyauterie de dérivation (39) et un dispositif de vannes (38) coopérant avec celle-ci pour diriger sélectivement ledit fluide d'absorption ou ladite solution contenant le réfrigérant vers ladite pompe à solution (18) sans passer par ledit absorbeur (12).

30. Appareil selon la revendication 29 dans lequel ledit dispositif de vannes comprend une vanne à trois voies (38) coopérant avec ladite tuyauterie (39) pour mettre sélectivement en dérivation ledit absorbeur (12).

31. Appareil selon la revendication 29 dans lequel ledit dispositif de vannes (38) comprend deux ou plusieurs vannes à deux voies (38) pour mettre sélectivement en dérivation ledit absorbeur (12).

32. Appareil selon la revendication 1 comprenant un conduit réfrigérant (62) pour diriger le réfrigérant depuis ledit échangeur de chaleur (19) vers ledit ensemble de générateur (11) et une vanne (64) pour ouvrir et fermer sélectivement ledit conduit réfrigérant.

33. Appareil selon la revendication 32 dans lequel ledit échangeur de chaleur est surélevé au-dessus dudit ensemble de générateur pour fournir un écoulement gravitationnel de réfrigérant condensé depuis ledit échangeur de chaleur (19) vers ledit ensemble de générateur (11) via ledit conduit réfrigérant (62).

34. Appareil selon la revendication 1 dans lequel ledit échangeur de chaleur comprend un serpentin à air du type à détente directe et ledit moyen de récupération de chaleur ou de froid comprend un appareil pour l'échange de chaleur ou de froid à partir dudit serpentin.
